# EUROPEAN PATENT SPECIFICATION

(11) **EP 0 713 807 B1**
(45) Date of publication and mention of the grant of the patent: **02.01.2002**
(21) Application number: 95117848.2
(22) Date of filing: 13.11.1995
(51) Int. Cl.: B60R 16/02

(54) **A system for distributing electrical energy in motor vehicles, particularly motor cars**
Elektrisches Energie-Verteilungssystem in Kraftfahrzeugen
Un système de distribution d'énergie électrique dans des véhicules à moteur, particulièrement dans des voitures

(30) Priority: 22.11.1994 IT TO940939
(43) Date of publication of application: 29.05.1996
(73) Proprietor: FIAT AUTO S.p.A., 10135 Torino (IT)
(72) Inventor: Panizza, Ettore, I-10129 Torino (IT)
(74) Representative: Serra, Francesco

(56) References cited:
- EP-A- 0 131 450
- EP-A- 0 194 915
- EP-A- 0 376 056
- EP-A- 0 471 630
- EDN, vol. 25, no. 20, November 1980 BOSTON , MASSACHUSETTS, USA, pages 79-81, ORMOND 'FIBER OPTICS /MICROCOMPUTER COMBINATION REPLACES AUTOMOTIVE WIRING HARNESSES.'

## Description

The present invention relates to a system for distributing electrical energy in motor vehicles, particularly motor cars.

In modern motor vehicles, particularly motor cars, the system for distributing electrical energy for the various user units present in the motor vehicle is becoming more and more complex and bulky because the number of users (loads) which can be operated by the occupants of the motor vehicle, and hence the number of electrical wires necessary, is becoming greater and greater. Moreover, there are more and more user loads with high power consumption, for example, heater units, windscreen wipers, electric sun roofs etc., which require cables with larger and larger cross-sections and consequently with thicker and thicker insulating sheaths.

The foregoing results in bulky and complex wiring which, particularly in the region of the dashboard, creates considerable problems as regards its physical location, that is, the space necessary for the wiring has to be found in a region, the dashboard, which is,itself crowded with controls and functions.

Systems have already been proposed for distributing electrical energy in motor cars with the use of a single power cable and a single control cable on which coded and multiplexed signals are transmitted. A unit associated with each load or group of loads can recognize the coded signal sent by a central unit and thus enable the loads to operate.

Document EP-A-0 131 450 describes an automotive multiplex system which transmits optical data signals through an optical fibre and receives signal through a fibre.

Although systems of the type specified above are functionally effective, they are quite complex, expensive and difficult to produce.

The present invention proposes a system for distributing electrical energy in motor vehicles, particularly motor cars, which avoids the aforementioned problems, and which is of simple construction and low cost.

The present invention achieves the aforesaid and other objects by virtue of a system for distributing electrical energy in motor vehicles, particularly motor cars, having the specific characteristics recited in the following claims.

Further characteristics and advantages of the present invention will become clear in the course of the following detailed description, provided purely by way of non-limiting example, with reference to the appended drawings, in which:
Figure 1 is a schematic plan view of a system according to the invention fitted in a motor car.
Figure 2 shows a more complete and enlarged detail of Figure 1,
Figure 3 shows an electro-optical transducer of Figure 1, more completely and on an enlarged scale,
Figure 4 shows an optical receiver of Figure 1, more completely and on an enlarged scale, and
Figure 5 shows a second embodiment of the optical receiver of Figure 4.

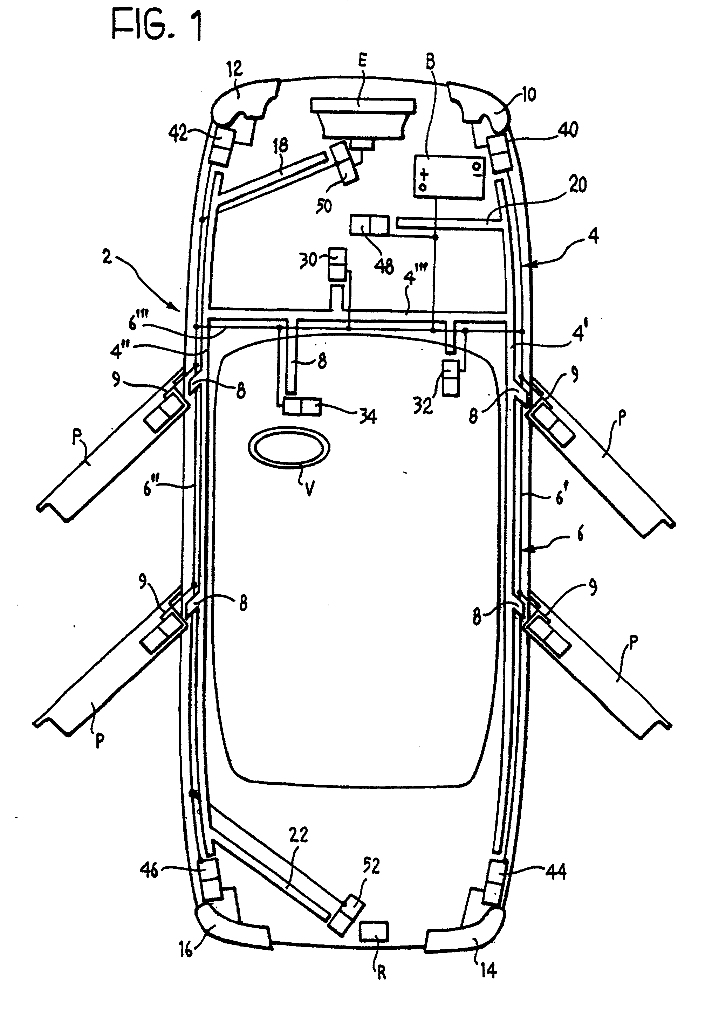

With reference to Figure 1, a motor car, indicated 2, having an electrical-energy distribution system according to the invention, is shown schematically in plan.

The system comprises a light-guide 4, for example, a plastics pipe with reflective internal walls, and a power cable 6, each comprising two substantially longitudinal portions 4' and 4", and 6' and 6", respectively.

The longitudinal portions 4' and 4" of the light guide 4 are interconnected by a substantially transverse light-guide portion 4"' and the longitudinal portions 6' and 6" of the power cable 6 are connected by a power cable portion 6"'.

The transverse portions 4"' and 6"' are disposed in the region of the dashboard (not shown) and are preferably housed in ducts formed in the dashboard.

Close to movable parts such as, for example, the doors P and the steering wheel V, light-guide portions 8 extend from the longitudinal portions 4' and 4" of the light-guide 4 and face the movable parts without extending into them, whereas portions 9 extending from the longitudinal portions 6' and 6" of the power cable 6 extend into the movable parts, for the reasons which will be explained below.

In Figure 1, the longitudinal portions 4' and 4" of the light-guide 4 terminate substantially adjacent the front and rear light units 10, 12 and 14, 16, respectively.

Further light-guide portions 18, 20, 22 reach the locations of the engine E, of the heater unit, not shown for simplicity, and of the rear foglight R, respectively.

Associated with each device (not shown for simplicity) for the electrical control of the actuators (loads) present in the motor car, such as, for example, the switches for switching on the lights, for operating the electric window regulators, the switches associated with the hand operable group for controlling the direction indicators, with the horn, etc., are electro-optical transducers, which face the light-guide 4 and are connected to the power cable 6, only those transducers, indicated 30, 32 and 34, for switching on the lights, switching on the rear foglight R and starting the engine E being shown (in Figure 1), for simplicity.

Facing the light-guide 4, near the actuators (loads) of Figure 1, that is, the light units 10, 12, 14 and 16, the engine E, the heater unit, and the rear foglight R, there are optical receivers (sensors), for example, photodiodes, connected to the power cable 6 and indicated 40, 42, 44, 46, 48, 50 and 52, respectively, in the drawing. Further optical receivers are disposed in the doors facing the portions 8 of the light-guides associated with the actuators responsible for the electric window regulators.

The optical receivers can operate the actuators (loads) for which they are responsible by means of power stages, not shown for simplicity.

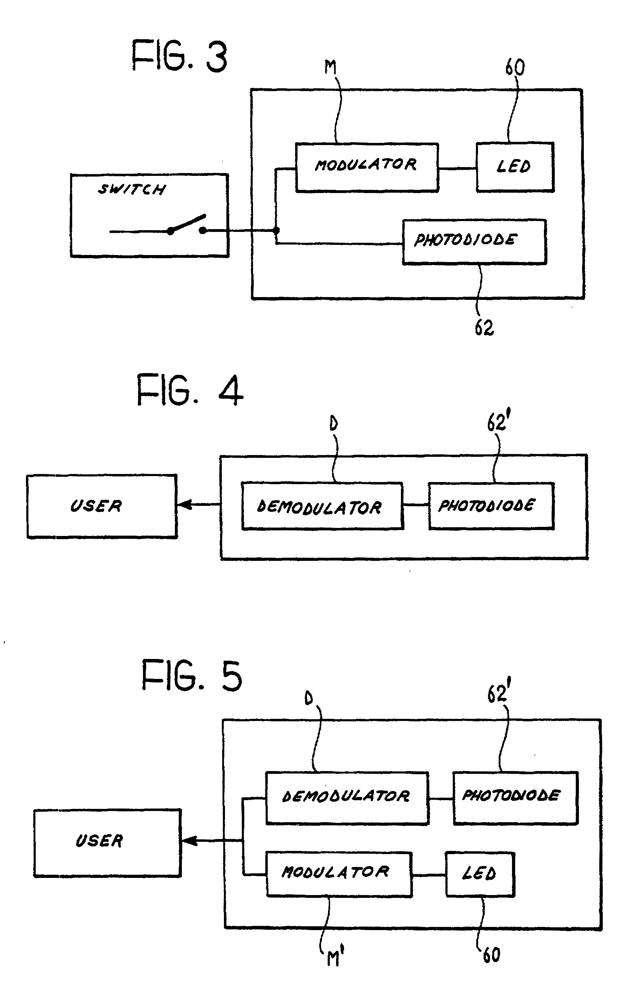

Each transducer associated with the respective device (switch) for the electrical control of the users (loads) comprises (Figure 3) a light-emitter unit 60, a receiver unit (sensor) 62 for receiving the light emitted by the various light-emitter units 60, and a specific modulator M for each light-emitter unit 60 associated therewith.

The light-emitter unit 60 typically comprises an LED and the receiver unit 62 typically comprises a photodiode.

Each of the optical receivers for the electrical control of the actuators (loads) comprises a sensor 62', typically a photodiode, and a demodulator D which is specific to each sensor 62' (Figure 4).

The power cable 6 is connected to the battery B present in the motor car.

The light-emitter unit of each transducer can emit its own light pulse which is modulated, for example, as regards its amplitude, and which is demodulated and recognized solely by the receiver or receivers responsible for operating the users (loads) controlled by that particular transducer.

In use, when a device for the electrical control of a load present in the motor car, for example, the control for switching on the lights, is operated, the LED of the transducer 30 associated therewith emits a particular amplitude-modulated optical signal.

This optical signal travels along the light-guide until it reaches one or more receivers associated with the load/loads which is/are to be switched on, in the case of Figure 1, the receivers 40, 42, 44 and 46.

Only these optical receivers are capable of recognizing a particular optical signal transmitted and once they have recognized it, they activate the associated loads 10, 12, 14 and 16, respectively, by means of the power stages already mentioned (not shown).

The photodiode belonging to the transducer unit enables the LED with which it is interfaced to operate solely in the absence of light signals in the light-guide; in other words, only an absence of light received by the photodiode of a transducer enables the associated LED to emit its train of light pulses.

If a certain load is to be switched off, everything takes place as already described for switching it on: the LED responsible for the load sends the modulated light signal indicating the switching-off function, and this reaches the receiver which is able to recognize the signal, and which thus switches off the power stage/stages associated with the load/loads controlled thereby, switching off, or in any case, de-activating the load or loads.

When commands relating to several loads are operated substantially simultaneously, the trains of modulated light pulses are sent to the light-guide 4 in sequence, starting with the transducer associated with the control operated first as regards time, then the transducer concerned with the control which was operated second, and so on.

The time indication of the control operated first is supplied by the first transducer, the light-sensitive part of which indicates the absence of light in the light-guide.

As can be seen from Figure 1, the light-guide 4 does not extend physically into the movable parts (doors, steering wheel) because the optical signals emitted by the various transducers in any case reach the optical receivers for which they are intended, since it is sufficient for these to be facing the light-guide 4.

Naturally, the optical receiver has to be connected to the power cable in order to be able to supply the necessary power to the power stages to operate the actuators (loads) for which it is responsible.

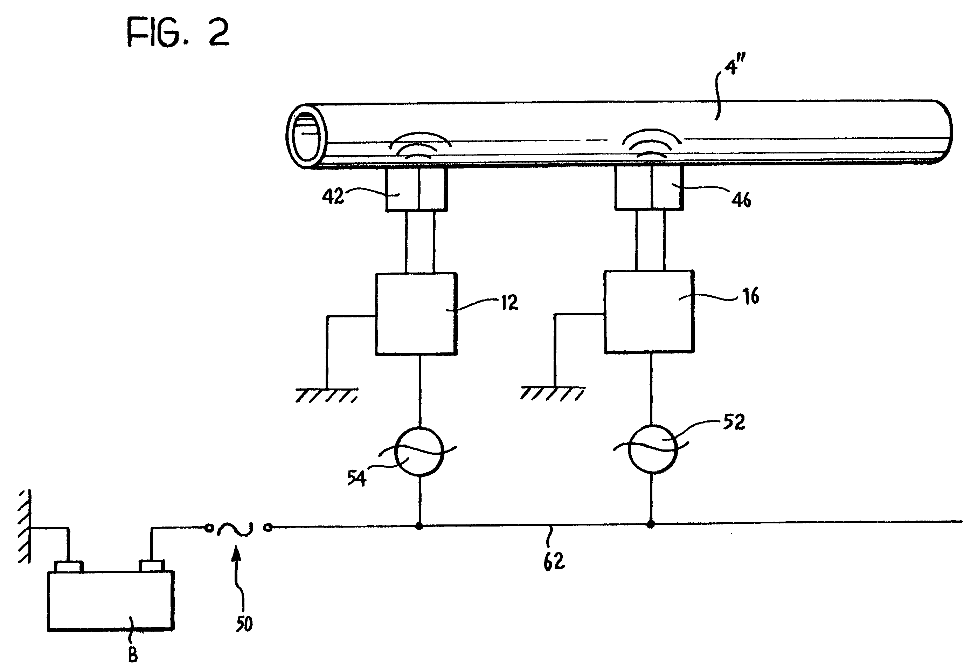

With reference to Figure 2, a fuse, indicated 50, is generally inserted between the battery pole B and the power cable 6 and cut-outs 52, 54 which can be reset are inserted between each user and the power cable 6, between the users 10 and 16 and the power cable 6 in the embodiment of Figure 2. In the event of a short-circuit, only the user short-circuited is thus temporarily excluded from the electrical circuit. The cut-out is reset automatically once the causes of the excess current are removed.

Naturally, the principle of the invention remaining the same, the details of construction and forms of embodiment may be varied widely with respect to those described and illustrated without thereby departing from the scope of the present invention.

For example, the optical receivers associated with the respective actuators may be of the type shown in Figure 5 in which, in addition to the sensor 62' and the specific demodulator D already shown in Fig. 4, there is a unit formed by a light-emitter 60 and a specific modulator M' which, in practice, is a transducer of the type associated with the user controls.

This arrangement is particularly advantageous when a diagnostic function is required for the users.

The power cable 6 may be housed inside the light-guide pipe 4; in this case, an insulating partition divides the part of the pipe intended for the light-guide from the part containing the power cable 6.

## Claims

1. A system for distributing electrical energy in motor vehicles, particularly motorcars, of the type comprising at least one power cable (6) for transmitting electrical energy necessary for supplying the actuators (10, 12, 14, 16, E, R) or loads present in the motor car and means (4) for transferring coded control signals for controlling the actuators or loads (10, 12, 14, 16, E. R), the means (4) for transferring the coded signals comprising a light-guide (4', 4", 4"'),
**characterized in that** the light-guide (4', 4", 4"') comprises at least one pipe of plastics material with reflective internal walls.

2. An energy-distribution system according to Claim 1, **characterized in that** the at least one pipe comprises a pair (4', 4") of substantially longitudinal pipes joined together by a substantially transverse pipe (4"').

3. A system according to Claims 1 to 2, **characterized in that** the light-guide (4', 4", 4"') is associated with a plurality of first transducer means (30, 32, 34) each of which is associated with a respective control operable in the motor vehicle in order to activate a respective actuator (10, 12, 14, 16, E, R), the transducer means being able to transmit, within the light-guide (4', 4", 4"'), coded light signals indicative of the fact that the respective control has been operated in order to activate the corresponding actuator/s (load/s) (10, 12, 14, 16, E, R).

4. A system according to any one of the preceding claims, **characterized in that** respective second transducer means (40, 42, 44, 46, 50, 52), associated with the light-guide (4', 4", 4"'), near the actuators (10, 12, 14, 16, E, R) (loads), can recognize the coded light signals sent by the first transducer means (30, 32, 34) and can activate the actuator or actuators (loads) (10, 12, 14, 16, E, R) to which they are connected.

5. A system according to any one of the preceding claims, **characterized in that** each of the first transducer means (30, 32, 34) comprises a light source (60) interfaced with a light detector (62) and a specific modulator (M).

6. A system according to any one of the preceding claims, **characterized in that** each of the second transducer means (40, 42, 44, 46, 50, 52) comprises a light detector (62') and a specific demodulator (D).

7. A system according to Claim 5 or Claim 6, **characterized in that** the light-detector (62, 62') comprises a photodiode.

8. A system according to any one of the preceding claims, **characterized in that** the second transducer means also comprise a light source (60) and a specific modulator (M').

9. A system according to any one of the preceding claims, **characterized in that** the light source (60) comprises an LED.

10. A system according to any one of the preceding claims, **characterized in that** the power cable (6) is housed inside the means (4) for transferring light signals.

## Patentansprüche

1. System zum Verteilen elektrischer Energie in. Kraftfahrzeugen, insbesondere Automobilen, und zwar der Art, die mindestens ein Stromkabel (6) zum Übertragen elektrischer Energie, die zum Versorgen der im.Automobil vorhandenen Stellglieder (10, 12, 14, 16, E, R) oder Verbraucher erforderlich ist, und Einrichtungen (4) zum Übertragen kodierter Steuerungssignale zum Steuern der Stellglieder oder Verbraucher (10, 12, 14, 16, E, R) umfasst, wobei die Einrichtungen (4) zum Übertragen der kodierten Signale einen Lichtleiter (4', 4", 4"') umfassen, **dadurch gekennzeichnet, dass** der Lichtleiter (4', 4", 4"') mindestens eine Kunststoffröhre mit reflektierenden Innenwänden umfasst.

2. Energieverteilungssystem nach Anspruch 1, **dadurch gekennzeichnet, dass** die mindestens eine Röhre ein Paar (4', 4") im Wesentlichen längsgerichteter Röhren umfasst, die durch eine im Wesentlichen quergerichtete Röhre (4"') miteinander verbunden sind.

3. System nach den Ansprüchen 1 bis 2, **dadurch gekennzeichnet, dass** der Lichtleiter (4', 4", 4"') mit einer Mehrzahl erster Messwandlereinrichtungen (30, 32, 34) in Verbindung steht, von. denen jede mit einer jeweiligen Steuerung in Verbindung steht, die im Kraftfahrzeug betriebsfähig ist, um ein jeweiliges Stellglied (10, 12, 14, 16, E, R) zu aktivieren, wobei die Messwandlereinrichtungen innerhalb des Lichtleiters (4', 4", 4"') kodierte Lichtsignale übertragen können, die den Umstand anzeigen, dass die jeweilige Steuerung betätigt worden ist, um das entsprechende Stellglied/die entsprechenden Stellglieder (Verbraucher) (10, 12, 14, 16, E, R) zu aktivieren.

4. System nach einem der vorstehenden Ansprüche, **dadurch gekennzeichnet, dass** jeweilige zweite Messwandlereinrichtungen (40, 42, 44, 46, 50, 52), die mit dem Lichtleiter (4', 4", 4"') in Verbindung stehen, und zwar in der Nähe der Stellglieder (10, 12, 14, 16, E, R) (Verbraucher), die von den ersten Messwandlereinrichtungen (30, 32, 34) gesendeten kodierten. Lichtsignale erkennen können und das. Stellglied oder die Stellglieder (Verbraucher) (10, 12, 14, 16, E, R), an die sie angeschlossen sind, aktivieren können.

5. System nach einem der vorstehenden Ansprüche, **dadurch gekennzeichnet, dass** jede der ersten Messwandlereinrichtungen (30, 32, 34) eine: Lichtquelle (60), die eine Schnittstelle mit einem Lichtdetektor (62) aufweist, und einen spezifischen Modulator (M) umfasst.

6. System nach einem der vorstehenden Ansprüche, **dadurch gekennzeichnet, dass** jede der zweiten Messwandlereinrichtungen (40, 42, 44, 46, 50, 52) einen Lichtdetektor (62') und einen spezifischen Demodulator (D) umfasst.

7. System nach Anspruch 5 oder Anspruch 6, **dadurch gekennzeichnet, dass** der Lichtdetektor (62, 62') eine Photodiode umfasst.

8. System nach einem der vorstehenden Ansprüche, **dadurch gekennzeichnet, dass** die zweiten Messwandlereinrichtungen ebenfalls eine Lichtquelle (60) und einen spezifischen Modulator (M') umfassen.

9. System nach einem der vorstehenden Ansprüche, **dadurch gekennzeichnet, dass** die Lichtquelle (60) eine LED umfasst.

10. System nach einem der vorstehenden Ansprüche, **dadurch gekennzeichnet, dass** das Stromkabel (6) innerhalb der Einrichtungen (4) zum Übertragen von Lichtsignalen untergebracht ist

## Revendications

1. Système de distribution d'énergie électrique dans des véhicules à moteur, notamment des automobiles, du type qui comprend au moins un câble d'alimentation (6) destiné à transmettre de l'énergie électrique nécessaire à l'alimentation des organes de manoeuvre (10, 12, 14, 16, E, R) ou des charges présents dans l'automobile, et un dispositif (4) de transfert de signaux codés de commande dés organes de manoeuvre ou des charges (10, 12, 14, 16, E, R), le dispositif (4) de transfert des signaux codés comprenant un guide de lumière (4', 4", 4"'), **caractérisé en ce que** le guide de lumière (4', 4", 4"') comporte au moins un tube de matière plastique ayant des parois internes réfléchissantes.

2. Système de distribution d'énergie selon la revendication 1, **caractérisé en ce qu'**au moins un tube comporte une paire (4', 4") de tubes pratiquement longitudinaux raccordés par un tube pratiquement transversal (4"').

3. Système selon les revendications 1 et 2, **caractérisé en ce que** le guide de lumière (4', 4", 4"') est associé à plusieurs premiers dispositifs transducteurs (30, 32, 34) associés chacun à une commande respective fonctionnant dans le véhicule à moteur pour activer un organe respectif de manoeuvre (10, 12, 14, 16, E, R), le dispositif transducteur pouvant transmettre, à l'intérieur du guide de lumière (4', 4", 4"'), des signaux lumineux codés représentatifs du fait que la commande respective a été commandée pour l'activation de l'organe ou des organes (charges) correspondants (10, 12, 14, 16, E, R).

4. Système selon l'une quelconque des revendications précédentes, **caractérisé en ce qu'**un second dispositif respectif à transducteur (40, 42, 44, 46, 50, 52) associé au guide de lumière (4', 4", 4"') près des organes de manoeuvre (10, 12, 14, 16, E, R) (charges), peut reconnaître les signaux lumineux codés transmis par le premier dispositif transducteur (30, 32, 34) et peut activer l'organe de manoeuvre ou les organes de manoeuvre (charges) (10, 12, 14, 16, E, R) auxquels il est connecté.

5. Système selon l'une quelconque des revendications précédentes, **caractérisé en ce que** chacun des premiers transducteurs (30, 32, 34) comprend une source de lumière (60) interfacée avec un détecteur de lumière (62) et un modulateur spécifique (M).

6. Système selon l'une quelconque des revendications précédentes, **caractérisé en ce que** chacun des seconds transducteurs (40, 42, 44, 46, 50, 52) comporte un détecteur de lumière (62') et un démodulateur spécifique (D).

7. Système selon la revendication 5 ou 6, **caractérisé en ce que** le détecteur de lumière (62, 62') est une photodiode.

8. Système selon l'une quelconque des revendications précédentes, **caractérisé en ce que** le second, transducteur comporte aussi une source de lumière (60) et un modulateur spécifique (M').

9. Système selon l'une quelconque des revendications précédentes, **caractérisé en ce que** la source de lumière (60) est une diode photoémissive.

10. Système selon l'une quelconque des revendications précédentes, **caractérisé en ce que** le câble d'alimentation (6) est logé à l'intérieur du dispositif (4) de transfert des signaux de lumière.
